# EUROPEAN PATENT APPLICATION

(11) **EP 4 362 517 A1**
(43) Date of publication of application: **01.05.2024**
(21) Application number: 23182392.3
(22) Date of filing: 29.06.2023
(51) Int. Cl.: H04W 12/069, H04W 12/106

(54) **MESSAGE INTEGRITY CODE (MIC) LENGTH INDICATION IN FAST BASIC SERVICE SET TRANSITION ELEMENT (FTE)**

(30) Priority: 26.10.2022 US 202263419462 P
(71) Applicant: INTEL Corporation, Santa Clara, CA 95054 (US)
(72) Inventor: BERG, Johannes, 32760 Detmold (DE); HUANG, Po-Kai, San Jose, CA 95131 (US); OUZIELI, Ido, TA 6382732 Tel Aviv (IL); PEER, Ilan, JM 71721 Modiin (IL)
(74) Representative: Viering, Jentschura & Partner mbB Patent- und Rechtsanwälte

(57) **Abstract**

This disclosure describes systems, methods, and devices related to MIC length indication. A device may utilize one or more reserved bits to indicate a message integrity code (MIC) length. The device may generate a frame comprising the one or more reserved bits, wherein the one or more reserved bits are included in a message integrity code (MIC) control of fast basic service set transition element (FTE). The device may cause to send the frame to one or more STAs.

## Description

### CROSS-REFERENCE TO RELATED APPLICATION(S)

This application claims priority to U.S. patent application 63/419,462 filed on October 26, 2022, the entirety of which is incorporated herein by reference.

### TECHNICAL FIELD

This disclosure generally relates to systems and methods for wireless communications and, more particularly, to message integrity code (MIC) length indication in fast basic service set transition element (FTE).

### BACKGROUND

Wireless devices are becoming widely prevalent and are increasingly requesting access to wireless channels. The Institute of Electrical and Electronics Engineers (IEEE) is developing one or more standards that utilize Orthogonal Frequency-Division Multiple Access (OFDMA) in channel allocation.

### BRIEF DESCRIPTION OF THE DRAWINGS

FIG. 1 is a network diagram illustrating an example network environment for MIC length indication, in accordance with one or more example embodiments of the present disclosure.
FIG. 2 shows an example Fast Basic Service Set Transition (FT) initial mobility domain association in a robust security network (RSN) as described in the IEEE 802.11 standard.
FIG. 3 illustrates an example of the basic flow for over-the-air FT protocol in an RSN as described in the IEEE 802.11 standard.
FIG. 4A shows the FTE message format as set forth in the IEEE 802.11 standard.
FIG. 4B shows the MIC control field format as set forth in the IEEE 802.11 standard.
FIG. 5 illustrates an example of the FT key hierarchy at an authenticator as set forth in IEEE 802.11 standard.
FIG. 6 illustrates an example of the FTE hierarchy.
FIG. 7 shows an example of the basic flow for over-the-air FT resource request protocol in an RSN, as described in the IEEE 802.11 standard.
FIG. 8 depicts an example of the basic flow for over-the-DS FT resource request protocol in an RSN, as described in the IEEE 802.11 standard.
FIG. 9 illustrates an example bit layout for the MIC control field that supports providing an indication of MIC length as part of the reserved bits.
FIG. 10 illustrates a flow diagram of illustrative process for an illustrative MIC length indication system, in accordance with one or more example embodiments of the present disclosure.
FIG. 11 illustrates a functional diagram of an exemplary communication station that may be suitable for use as a user device, in accordance with one or more example embodiments of the present disclosure.
FIG. 12 illustrates a block diagram of an example machine upon which any of one or more techniques (e.g., methods) may be performed, in accordance with one or more example embodiments of the present disclosure.
FIG. 13 is a block diagram of a radio architecture in accordance with some examples.
FIG. 14 illustrates an example front-end module circuitry for use in the radio architecture of FIG. 13, in accordance with one or more example embodiments of the present disclosure.

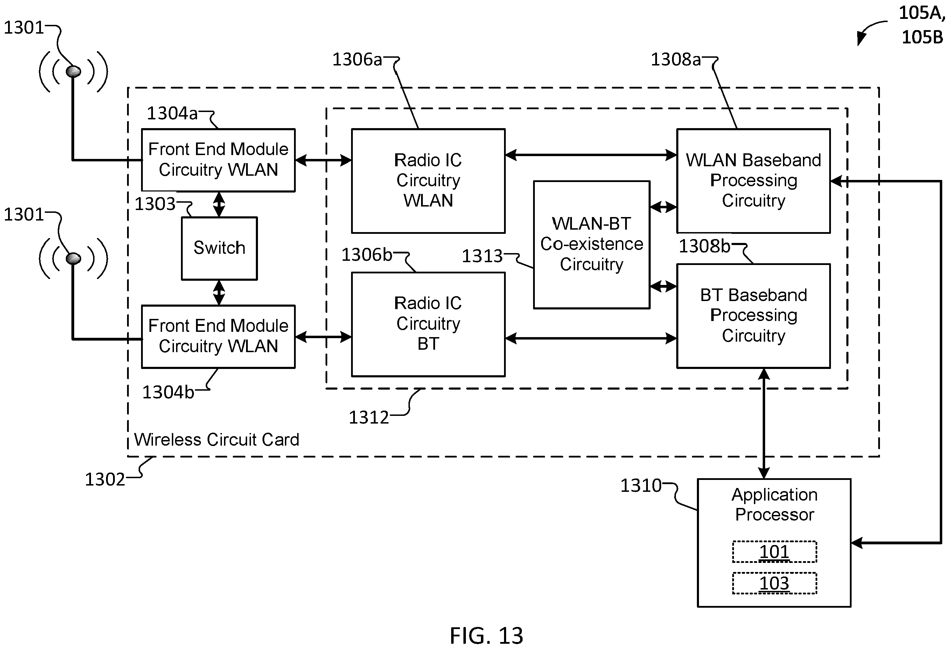

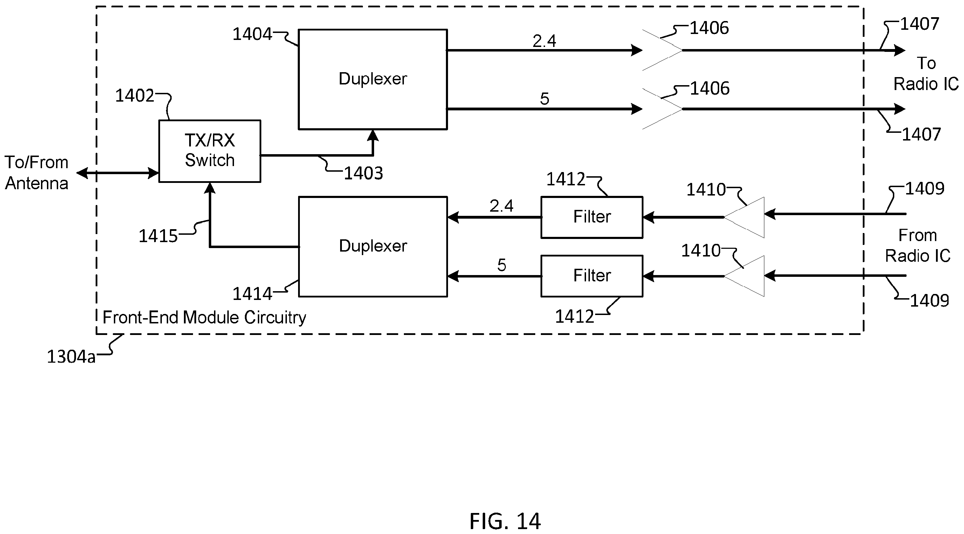

FIG. 14 illustrates an example radio IC circuitry for use in the radio architecture of FIG. 13, in accordance with one or more example embodiments of the present disclosure.

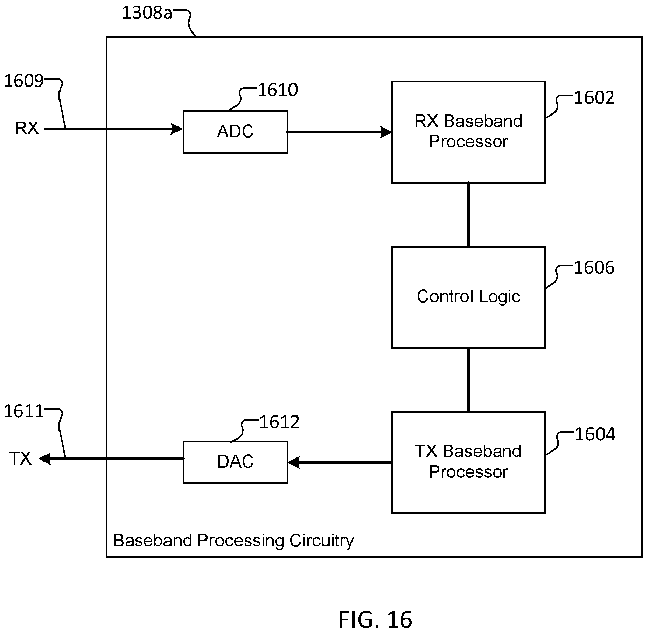

FIG. 16 illustrates an example baseband processing circuitry for use in the radio architecture of FIG. 13, in accordance with one or more example embodiments of the present disclosure.

### DETAILED DESCRIPTION

The following description and drawings illustrate specific embodiments that enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

In specifications prepared by the IEEE 802.11 Working Group, namely the Part 11: Wireless LAN Medium Access Control (MAC) and Physical Layer (PHY) Specifications, referenced is a fast basic service set transition (FT) over-the air protocol that involves an exchange of four messages. *See*, *e.g.*, IEEE Standard for Information Technology Telecommunications and Information Exchange between Systems local and Metropolitan Area Networks-Specific Requirements Part 11: Wireless LAN Medium Access Control (MAC) and Physical Layer (PHY) Specifications, in IEEE Std 802.11-2020 (Revision of IEEE Std 802.11-2016), 26 Feb. 2021, doi: 10.1109/IEEESTD.2021.9363693 (hereinafter IEEE 802.11-2020). As should be understood, while this version of the standard may be refereced in the discussion below, the disclosed features discussed herein are not necessarily limited to any particular version of the 802.11 standard.

In the first message of the over-the air FT protocol, when the authentication and key management (AKM) suite is used, for example, corresponding to AKM 25, the target FT receiver (FTR) needs to know the length of the message integrity code (MIC) in order to parse the first message. However, the target FTR may not know the negotiated hash algorithm, which may only be known to the FT owner (FTO) and the current FTR through its initial association. The target FTR might be able to determine the hash algorithm by retrieving the pairwise master key (PMK-R1) at a later time. This is because the length of PMK-R1 should be the same as the length of the hash digest, as set forth in IEEE 802.11-2020 and as shown below:
PMK-R1=KDF-*Hash*-*Length*(PMK-R0, "FT-R1", R1KH-ID∥S1KH-ID)

In the above relation, *KDF-Hash-Length* is the key derivation function as defined in "Key derivation function (KDF)" (e.g., 12.7.1.6.2 of IEEE 802.11-2020). *Hash* is the hash algorithm specific to the negotiated AKM (see the "AKM suite selectors" table (e.g., Table 9-151 of IEEE 802.11-2020)). *Length* is the length of the hash alogrithm's digest. PMK-R0 is the first level key in the FT key hierarchy. R1KH-ID is a medium access MAC address of the hold of the PMK-R1 in the Authenticator of the AP. SIKH is the supplicant address (SPA).

However, this means that the target FTR may need to parse the first message half way and then, in order to determine the length of PMK-R1, pause to retrieve the PMK-R1 based on PMKR0Name, as shown below. This is certainly different from the parsing procedure that currently exists in the standard.

The R1KH of the target access point (AP) uses the value of PMKR0Name and other information in the frame to calculate PMKRIName. If the target AP does not have the key identified by PMKRIName, it may retrieve that key from the R0KH identified by the FTO. See details in the "Key Holders" section of the standard (e.g., 13.2 of IEEE 802.11-2020). Upon receiving a new PMK-R1 for a station (STA), the target AP shall delete the prior PMK-R1 security association and PTKSAs derived from the prior PMKR1.

In the following disclosure, an additional element is described that indicates the negotiated group based on the table for "Hash algorithm based on length of prime" (e.g., Table 12-1 of IEEE 802.11-2020). As a result, the length of the hash algorithm may be determined in the first message of the FT protocol, and MIC length may be parsed in the first message of the FT protocol.

Adding this additional element may mean that the element needs to be ordered before the FTE element. This may complicate the order of elements, as set forth in "Authentication frame body" (e.g., Table 9-40 of IEEE 802.11-2020).

Example embodiments of the present disclosure relate to systems, methods, and devices for message integrity code (MIC) length indication in a fast basic service set transition element (FTE).

In one embodiment, a MIC length indication system may use the reserved bits in the MIC control field of the FTE.

In one or more embodiments, a MIC length indication system may use additional verification on the target FTR to verify that the indicated MIC length aligns with the MIC length inferred from the PMK-R1 length retrieved later. This method does not need the additional element, which, as discussed above, the additional element may need to be particularly located within the frame and thus may impact the order of elements in the frame. This method directly indicates MIC length to help with parsing. This method takes into account the existing state of the standard, where the method is compatible with the existing state of the standard where the reserved bits in which the information indicating the MIC length may be placed, are not required and may are currently ignored.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

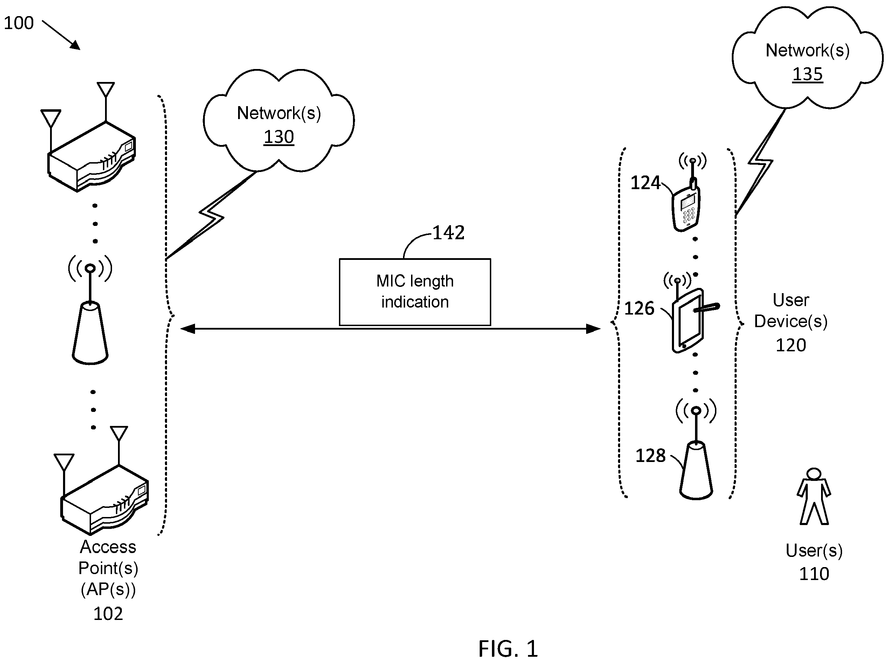

FIG. 1 is a network diagram illustrating an example network environment of MIC length indication, according to some example embodiments of the present disclosure. Wireless network 100 may include one or more user device(s) 120 and one or more access points(s) (AP(s)) 102, which may communicate in accordance with IEEE 802.11 communication standards. The user device(s) 120 may be mobile devices that are non-stationary (e.g., not having fixed locations) or may be stationary devices.

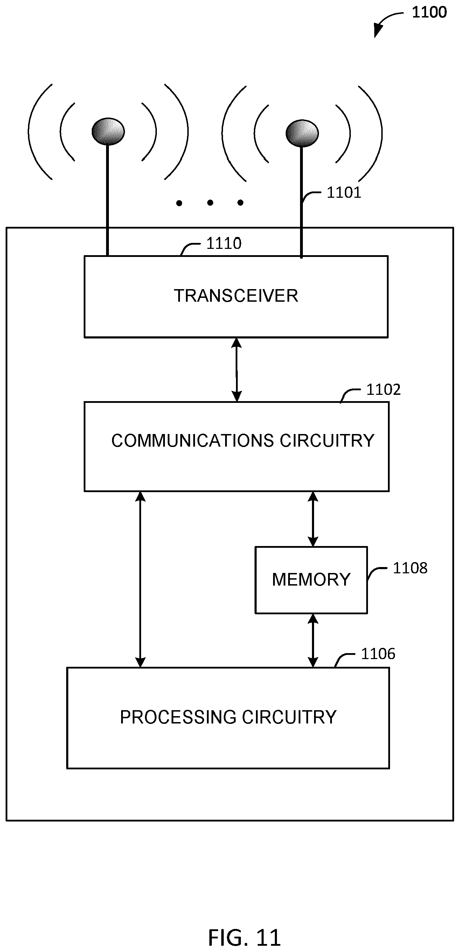

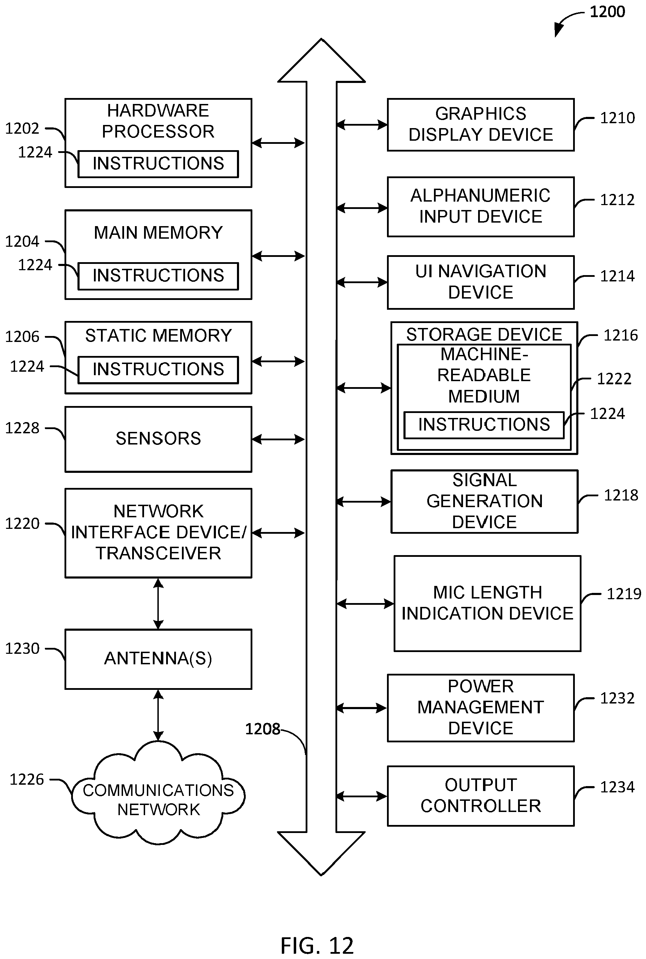

In some embodiments, the user device(s) 120 and the AP(s) 102 may include one or more computer systems similar to that of, discussed in more detail below, the functional diagram of FIG. 11 and/or the example machine/system of FIG. 12.

One or more illustrative user device(s) 120 and/or AP(s) 102 may be operable by one or more user(s) 110. It should be noted that any addressable unit may be a station (STA). An STA may take on multiple distinct characteristics, each of which may shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static, device. For example, user device(s) 120 and/or AP(s) 102 may include: a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasiomnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax, 802.11be, etc.), 6 GHz channels (e.g., 802.11ax, 802.11be, etc.), or 60 GHZ channels (e.g. 802.11ad, 802.11 ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, and with reference to FIG. 1, a user device 120 may be in communication with one or more AP(s) 102. For example, one or more AP(s) 102 may implement a MIC length indication 142 with one or more user devices 120.

It is understood that the above descriptions are for purposes of illustration and are not meant to be limiting.

In one or more embodiments, a MIC length indication system may facilitate STA association.

Currently, when a STA associates with an AP, the STA can associate with another AP by simply sending another reassociation frame.

Fast basic service set (BSS) transition (FT) is used to simplify roaming procedure from one AP to another AP in the same mobility domain.

The definition of mobility domain includes the following terms.

Basic service set (BSS): A set of stations (STAs) that have successfully synchronized using the JOIN service primitives (e.g., the primitive used to synchronize to the beacon period of the BSS) and one STA that has used the START primitive (e.g., the primitive used for starting a new BSS or becoming a member of a mesh basic service set (MBSS)). Alternatively, a BSS is a set of STAs that have used the START primitive specifying matching mesh profiles where the match of the mesh profiles has been verified via the scanning procedure. Membership in a BSS does not imply that wireless communication with all other members of the BSS is possible.

Mobility domain: A set of basic service sets (BSSs), within the same extended service set (ESS), that support fast BSS transitions between themselves and that are identified by the set's mobility domain identifier (MDID).

Extended service set (ESS): An ESS is the union of the infrastructure BSSs with the same SSID connected by a distribution system (DS). The ESS does not include the DS.

There are two parts of the FT.

FT initial mobility domain association as described in "FT initial mobility domain association" (section 13.4 of IEEE 802.11-2020). This procedure describes the first step to associate with an AP in a mobility domain. The common procedure is FT initial mobility domain association in an RSN as described in "FT initial mobility domain association in an RSN" (second 13.4 of IEEE 802.11-2020).

VFT protocol as described in "FT protocol" (section 13.5 of IEEE 802.11-2020). This procedure describes how a STA moves from one AP to another AP in a mobility domain. The common procedure is Over-the-air FT protocol authentication in an RSN as described in "Over-the-air FT protocol authentication in an RSN" (section 13.5.2 of IEEE 802.11-2020).

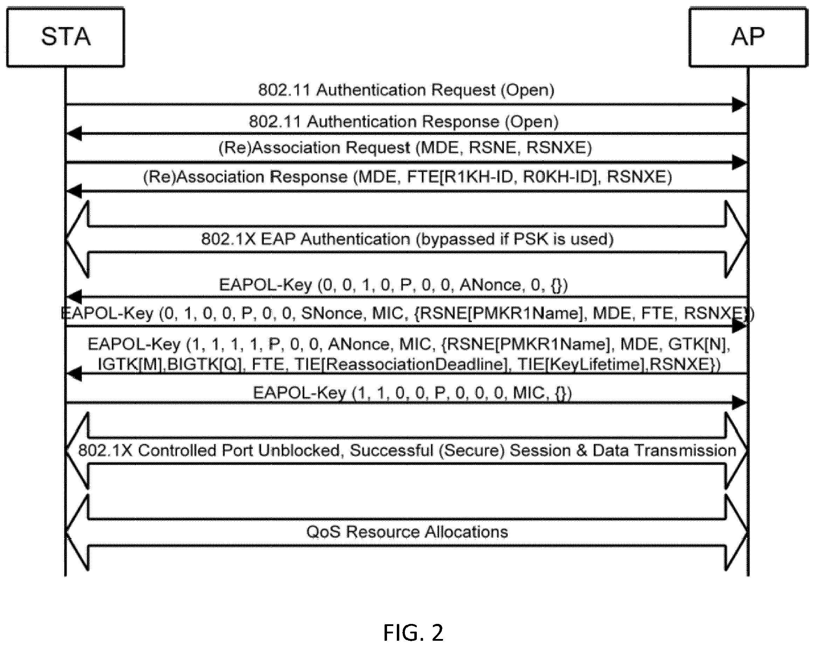

The basic flow for the initial association is described below and reproduced as FIG. 2 from "Figure 13-2-FT initial mobility domain association in an RSN" of IEEE 802.11-2020.
- Authentication request/response exchange to achieve open system authentication, which admits any STA to the DS.
- Association request/response to exchange mobility domain information in mobility domain element (MDE) and FT information in Fast BSS Transition element (FTE).
- 802.1X EAP authentication to generate PMK-R0, to be used to generate any PMK-R1, and PMK-R1 between the pair of AP and STA.
- FT 4-way handshake to generate PTK and deliver GTK, IGTK, BIGTK.

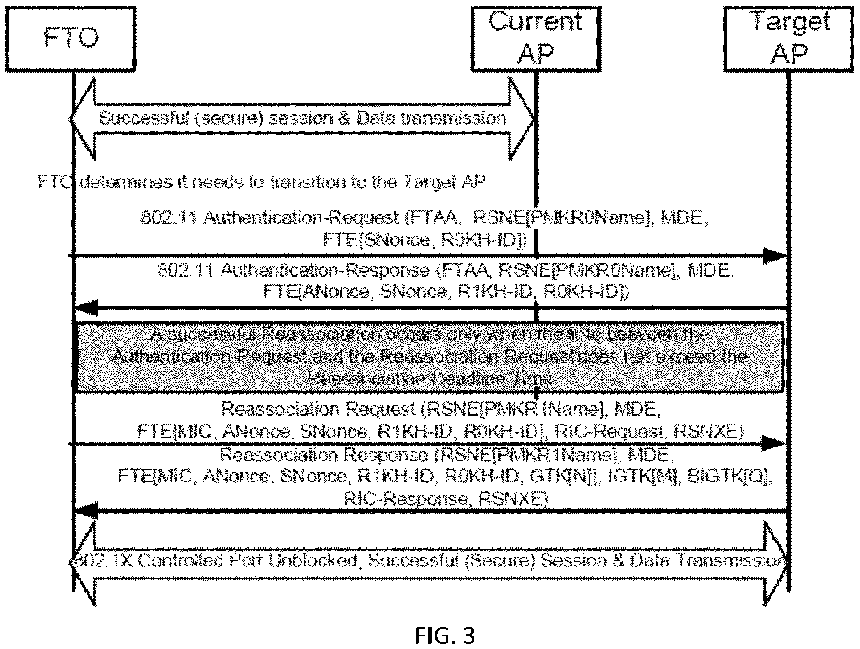

The basic flow for the roaming is described below and reproduced as FIG. 3 from Figure "13-5-Over-the-air FT protocol in an RSN" of IEEE 802.11-2020.
- STA or FTO does FT authentication to generate PTK based on the PMK-R1 between STA and target AP. PMK-R1 is generated based on PMK-R0.
- STA or FTO does reassociation request/response exchange with target AP.
- GTK, IGTK, BIGTK are delivered by target AP in FTE carried in the reassociation response.

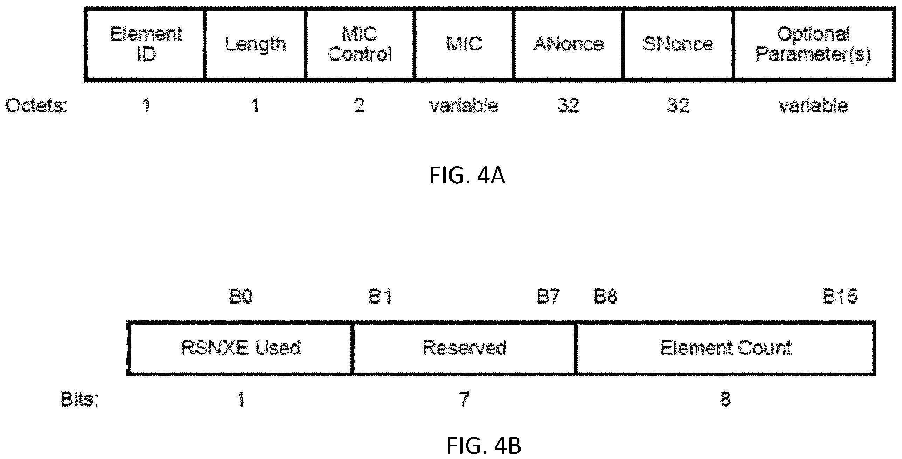

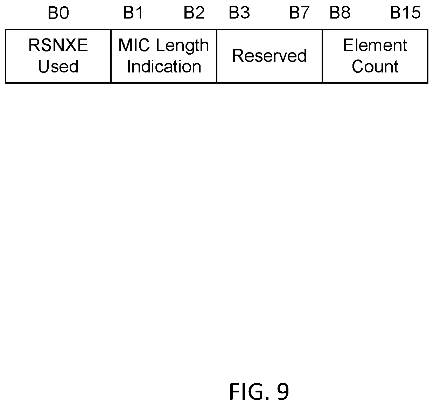

Note that for the first message of authentication request, in the FTE, although there is no MIC included, MIC field is still present and the length is variable, depending on the negotiation. The format of the first message is set forth in the standard by "FTE Format" (Figure 9-356 of IEEE 802.11-2020) and is reproduced as FIG. 4A.

The 2 Octet "MIC Control" contains three subfields that are included in the message integrity code (MIC) calculation: RSNXE Used subfield, Reserved subfield, and Element Count subfield as set forth in the standard by "MIC Control field format" (Figure 9-357 of IEEE 802.11-2020) and reproduced as FIG. 4B.

The Element Count subfield of the MIC Control field contains the number of elements that are included in the message integrity code (MIC) calculation.

When the Element Count subfield has a value greater than 0, the MIC field contains a MIC. Otherwise, the MIC field is set to 0. The length of the MIC field depends on the negotiated AKM selector and is specified in the table called "Integrity and key wrap algorithms" (Table 12-10 of IEEE 802.11-2020).

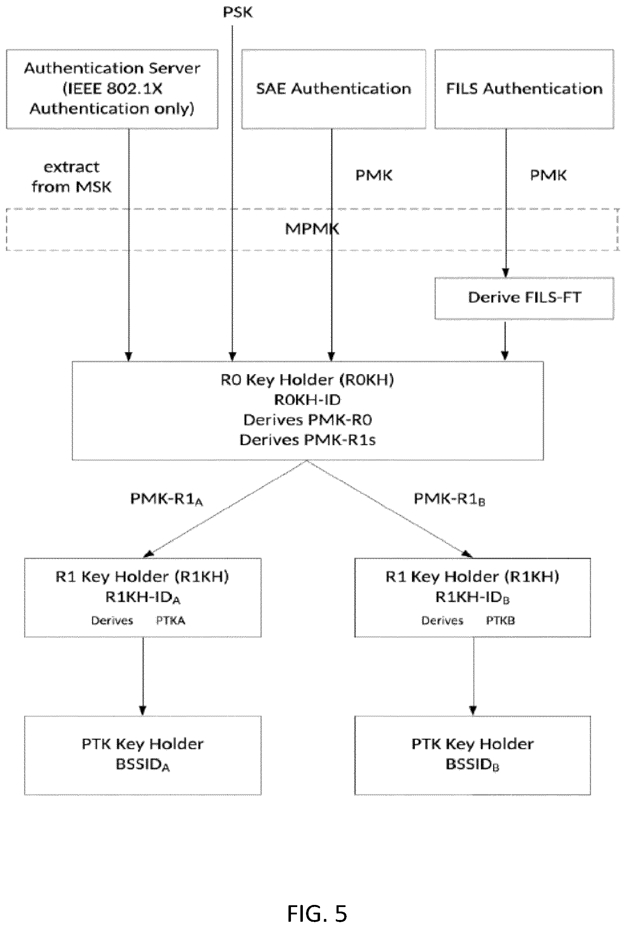

The FT key hierarchy is explained below and shown in "FT key hierarchy at an Authenticator" (Figure 12-32 of IEEE 802.11-2020) and reproduced as FIG. 5. On the AP side:
- R0 key holder (R0KH) interacts with the IEEE 802.1X Authenticator to receive the MSK resulting from an EAP authentication.
- R0KH generates PMK-R0 and PMK-R1. Each PMK-R1 is for an AP and STA pair.
- R1 key holder (R1KH) interacts with the IEEE 802.1X Authenticator to open the Controlled Port.

On the STA side:
- S0 key holder (S0KH) interacts with the IEEE 802.1X functional block (see Figure 4-24 (Portion of the ISO/IEC basic reference model covered in this standard) in 4.9 (Reference model)) to receive the MSK resulting from an EAP authentication or the (#114)FILS-FT resulting from a FILS authentication(11ai).
- S1 Key holder (S1KH) interacts with the IEEE 802.1X entity to open the Controlled Port (FT 4 way handshake).

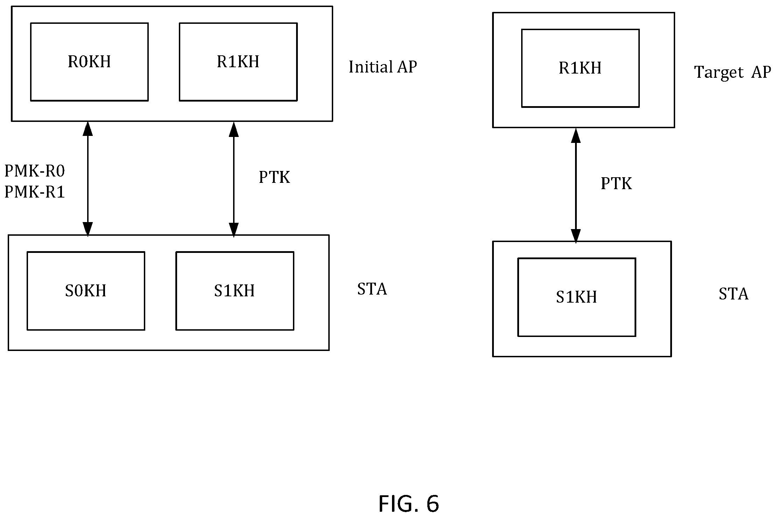

An example of the FTE hierarchy is shown in FIG. 6.

The AKM suite may vary, depending on various factors, as indicated in the "AKM suite selectors" table (e.g., Table 9-151 of IEEE 802.11-2020). AKM 25 is an additional suite type that has been added to the standard, where AKM 25 may be selected as the suit type, for example, when simultaneous authentication of equals (SAE) is used for the initial domain association and then later roam using FT, as shown in the table below:

| | | **Meaning** | | | | |
|---|---|---|---|---|---|---|
| **OUI** | **Suite type** | **Authentication Type** | **Key management type** | **Key derivation type** | **Authentication algorithm numbers ("Authentication Algorithm Number field" (9.4.1.1 of IEEE 802.11-2020))** | **Cipher suite selector restriction** |
| 00-0F-AC | 25 | FT authentication over SAE | FT key management defined in "FT key hierarchy" (12.7.1.6 of IEEE 802.11-2020) | Defined in "Key derivation function (KDF)" (12.7.1.6.2 of IEEE 802.11-2020) using the hash algorithm specified in "Assumptions on SAE" (12.4.2 of IEEE 802.11-2020) | 3 (SAE) for FT Initial Mobility Domain Association 2 (FT) for FT protocol reassociation as defined in "FT protocol" (13.5 of IEEE 802.11-2020) 0 (open) for FT Initial Mobility Domain Association over PMKSA caching | None |

Details of AKM 25 have also been added to the "Integrity and key wrap algorithms" table (e.g., Table 12-10 of IEEE 802.11-2020), as shown in the row of the table below:

| **AKM** | **Integrity algorithm** | **KCK_bits** | **Size of MIC** | **Key wrap algorithm** | **KEK_bits** | **KCK2_bits** | **KEK2_bits** |
|---|---|---|---|---|---|---|---|
| 00-0F-AC:25 | HMAC-SHA-256/ HMAC-SHA-384/ HMAC-SHA-512 (see table for "Hash identified in SAE and integrity algorithm") | 128/ 192/ 256 | 16/ 24/ 32 | NIST AES Key Wrap | 128/ 256/ 256 | 0 | 0 |

The hash identified in the SAE and integrity algorithm is further specified in the "Hash identified in SAE and integrity algorithm" table, as shown below:

| **Hash identified in "Assumption on SAE" (12.4.2 of IEEE 802.11-2020)** | **Integrity algorithm** |
|---|---|
| SHA-256 | HMAC-SHA-256 |
| SHA-384 | HMAC-SHA-384 |
| SHA-512 | HMAC-SHA-512 |

The hash algorithm may be based on the length of prime, as shown in the "Hash algorithm based on length of prime" table below:

| **ECC prime length** | **FFC prime length** | **Hash algorithm** |
|---|---|---|
| p ≤ 256 | p ≤ 2048 | SHA-256 |
| 256 < p ≤ 256 | 2048 p ≤ 3072 | SHA-384 |
| 384 < p | 3072 < p | SHA-512 |

For AKM 25, then, the length of MIC in FTE depends on the hash algorithm negotiated under SAE and can have length of 16, 24, or 32, depending on the negotiated hash algorithm. However, the target FTR does not know the negotiated Hash algorithm because this is only known to the FTO and the current FTR as part of the initial domain association.

The same problem may also exist with the first message of over-the-DS FT protocol, where the target FTR does not yet know the negotiated Hash algorithm. See "Over-the-air FT protocol in an RSN" of IEEE 802.11-2020, as discussed above and reproduced in FIG. 3.

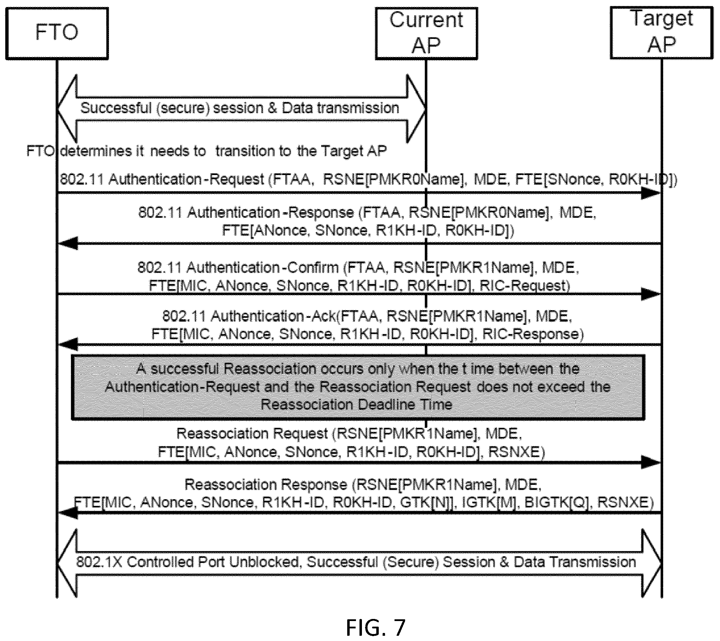

The same problem may also exist with the first message of over-the-air FT resource request protocol as shown in the figure for "Over-the-air FT resource request protocol in an RSN" (e.g., Figure 12-10 in IEEE 802.11-2020, reproduced herein as FIG. 7).

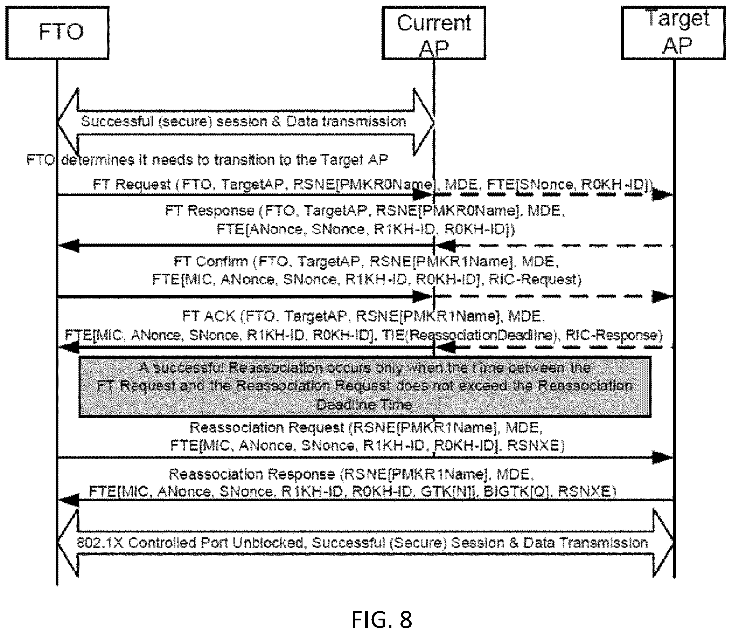

The same problem may also exist with the first message of the over-the-DS FT resource request protocol, as shown in the figure for "Over-the-DS FT resource request protocol in an RSN" (e.g., Figure 13-12 in IEEE 802.11-2020, reproduced herein as FIG. 8.)

To overcome this problem, the MIC length may be provided in the MIC control field. To provide the MIC length in the MIC control field, two of the reserved bits of the MIC control field (e.g., of the Reserved subfield as discussed above with respect to FIGs. 4A and 4B) may be used to indicate the length (in octets) of the MIC that follows. One entry may be defined to indicate a length of 16, one entry may be defined to indicate a length of 24, one entry may be defined to indicate a length of 32, and one entry may be defined to indicate a length that is determined by AKM alone (this entry may be used for backward compatibility).

One example for the MIC control field, where two bits of the Reserved subfield are used to indicate the MIC length is shown in FIG. 9, where B1 and B2 of the 16 bits of the MIC control field are used to indicate the MIC length.

One example for the format of the two bits that define the indicated MIC length is shown in the table below.

| | |
|---|---|
| **B1 B2** | **Indicated MIC length** |
| 0 0 | Length determined by indicated AKM |
| 0 1 | 16 |
| 1 0 | 24 |
| 1 1 | 32 |

Another example for the format of the two bits that define the indicated MIC length is shown in the table below:

| **B1 B2** | **Indicated MIC length** |
|---|---|
| 0 0 | 16 |
| 0 1 | 24 |
| 1 0 | 32 |
| 1 1 | Reserved |

As should be understood, the above examples of how the bits of the Reserved subfield may be used to indicate the MIC length (e.g., which bit(s) are used and their corresponding definitions) is merely exemplary, and any combination of bits of the Reserved subfield may be defined to indicate a MIC length.

When AKM 25 is indicated in the RSNE of the frame that carries FTE, the MIC length indication may indicate the length in the following MIC field of MIC control in, where the MIC size (MIC length) is based on the "Integrity and key wrap algorithms" table discussed above (e.g., Table 12-10 of IEEE 802.11-2020).

When AKM 25 is indicated in the RSNE of the frame that carries FTE, the Target FTR may determine the MIC size (MIC length) of the MIC control in FTE of the following transmission based on the retrieved PMK-R1 size. An example correspondence between PMK-R1 size and MIC size (MIC length) is shown the table below:

| **PMK-R1 size** | **MIC size in bvtes** |
|---|---|
| 256 bits | 16 |
| 384 bits | 24 |
| 512 bits | 32 |

When AKM 25 is indicated in the RSNE of the frame that carries FTE, the Target FTR may verify that the indicated MIC size (MIC length) in the first message is the same as the derived MIC size (MIC length) of MIC control in FTE (derived from PMK-R1). If the size (length) does not match, the Target FTR rejects FT protocol with a status code indicating a mismatch. For example, the status code may be:

### MIC_SIZE_DOES_NOT_MATCH_REQUTRED_SIZE_ FOR_CORRESPONDING_PMK_R1_SIZE.

When the AKM is something other than AKM 25, the indication of the MIC length in the MIC control may provide an indication of something other than length. For example, when the AKM is something other than AKM 25, the bits normally used to provide MIC length may indicate a value of 0, meaning that the MIC size is determined by the AKM. As another example, when the AKM is something other than AKM 25, the bits normally used to provide MIC length may indicate the length in the following MIC field as determined by the "Integrity and key wrap algorithms" table discussed above (e.g., Table 12-10 of IEEE 802.11-2020).

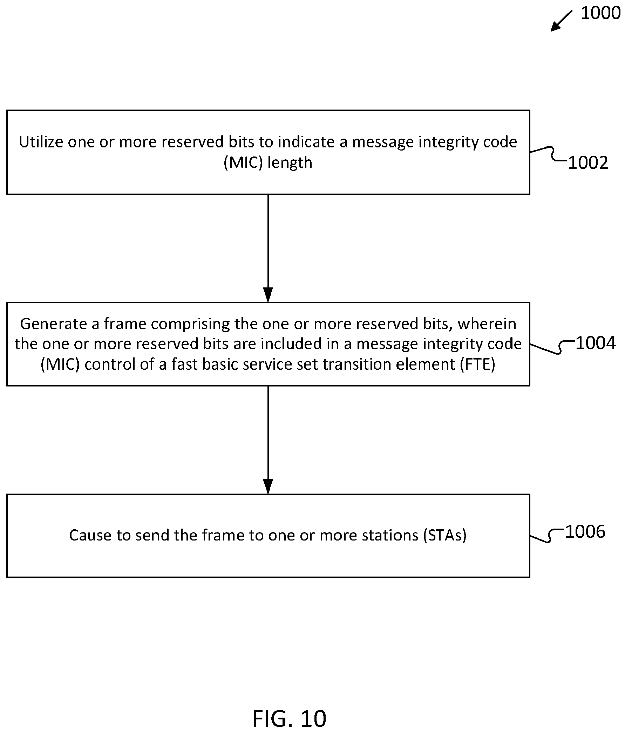

FIG. 10 illustrates a flow diagram of illustrative process 1000 for a MIC length indication system, in accordance with one or more example embodiments of the present disclosure.

At block 1002, a device (e.g., the user device(s) 120 and/or the AP(s) 102 of FIG. 1 and/or the MIC length indication device 1219 of FIG. 12) may utilize one or more reserved bits to indicate a message integrity code (MIC) length.

At block 1004, the device may generate a frame comprising the one or more reserved bits, wherein the one or more reserved bits are included in a message integrity code (MIC) control of a fast basic service set transition element (FTE).

At block 1006, the device may cause to send the frame to one or more stations (STAs).

It is understood that the above descriptions are for purposes of illustration and are not meant to be limiting.

FIG. 11 shows a functional diagram of an exemplary communication station 1100, in accordance with one or more example embodiments of the present disclosure. In one embodiment, FIG. 11 illustrates a functional block diagram of a communication station that may be suitable for use as an AP (e.g., AP(s) 102 of FIG. 1) or as a user device (e.g. user device(s) 120 of FIG. 1) in accordance with some embodiments. The communication station 1100 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 1100 may include communications circuitry 1102 and a transceiver 1110 for transmitting and receiving signals to and from other communication stations using one or more antennas 1101. The communications circuitry 1102 may include circuitry that can operate the physical layer (PHY) communications and/or medium access control (MAC) communications for controlling access to the wireless medium, and/or any other communications layers for transmitting and receiving signals. The communication station 1100 may also include processing circuitry 1106 and memory 1108 arranged to perform the operations described herein. In some embodiments, the communications circuitry 1102 and the processing circuitry 1106 may be configured to perform operations detailed in the above figures, diagrams, and flows.

In accordance with some embodiments, the communications circuitry 1102 may be arranged to contend for a wireless medium and configure frames or packets for communicating over the wireless medium. The communications circuitry 1102 may be arranged to transmit and receive signals. The communications circuitry 1102 may also include circuitry for modulation/demodulation, upconversion/downconversion, filtering, amplification, etc. In some embodiments, the processing circuitry 1106 of the communication station 1100 may include one or more processors. In other embodiments, two or more antennas 1101 may be coupled to the communications circuitry 1102 arranged for sending and receiving signals. The memory 1108 may store information for configuring the processing circuitry 1106 to perform operations for configuring and transmitting message frames and performing the various operations described herein. The memory 1108 may include any type of memory, including non-transitory memory, for storing information in a form readable by a machine (e.g., a computer). For example, the memory 1108 may include a computer-readable storage device, read-only memory (ROM), random-access memory (RAM), magnetic disk storage media, optical storage media, flash-memory devices and other storage devices and media.

In some embodiments, the communication station 1100 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 1100 may include one or more antennas 1101. The antennas 1101 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 1100 may include one or more of a keyboard, a display, a non-volatile memory port, multiple antennas, a graphics processor, an application processor, speakers, and other mobile device elements. The display may be an LCD screen including a touch screen.

Although the communication station 1100 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field- programmable gate arrays (FPGAs), application specific integrated circuits (ASICs), radio- frequency integrated circuits (RFICs) and combinations of various hardware and logic circuitry for performing at least the functions described herein. In some embodiments, the functional elements of the communication station 1100 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 1100 may include one or more processors and may be configured with instructions stored on a computer-readable storage device.

FIG. 12 illustrates a block diagram of an example of a machine 1200 or system upon which any one or more of the techniques (e.g., methodologies) discussed herein may be performed. In other embodiments, the machine 1200 may operate as a standalone device or may be connected (e.g., networked) to other machines. In a networked deployment, the machine 1200 may operate in the capacity of a server machine, a client machine, or both in server-client network environments. In an example, the machine 1200 may act as a peer machine in peer-to-peer (P2P) (or other distributed) network environments. The machine 1200 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the execution units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 1200 may include a hardware processor 1202 (e.g., a central processing unit (CPU), a graphics processing unit (GPU), a hardware processor core, or any combination thereof), a main memory 1204 and a static memory 1206, some or all of which may communicate with each other via an interlink (e.g., bus) 1208. The machine 1200 may further include a power management device 1232, a graphics display device 1210, an alphanumeric input device 1212 (e.g., a keyboard), and a user interface (UI) navigation device 1214 (e.g., a mouse). In an example, the graphics display device 1210, alphanumeric input device 1212, and UI navigation device 1214 may be a touch screen display. The machine 1200 may additionally include a storage device (e.g., drive unit) 1216, a signal generation device 1218 (e.g., a speaker), a MIC length indication device 1219, a network interface device/transceiver 1220 coupled to antenna(s) 1230, and one or more sensors 1228, such as a global positioning system (GPS) sensor, a compass, an accelerometer, or other sensor. The machine 1200 may include an output controller 1234, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 1202 for generation and processing of the baseband signals and for controlling operations of the main memory 1204, the storage device 1216, and/or the MIC length indication device 1219. The baseband processor may be provided on a single radio card, a single chip, or an integrated circuit (IC).

The storage device 1216 may include a machine readable medium 1222 on which is stored one or more sets of data structures or instructions 1224 (e.g., software) embodying or utilized by any one or more of the techniques or functions described herein. The instructions 1224 may also reside, completely or at least partially, within the main memory 1204, within the static memory 1206, or within the hardware processor 1202 during execution thereof by the machine 1200. In an example, one or any combination of the hardware processor 1202, the main memory 1204, the static memory 1206, or the storage device 1216 may constitute machine-readable media.

The MIC length indication device 1219 may carry out or perform any of the operations and processes (e.g., process 1000) described and shown above.

It is understood that the above are only a subset of what the MIC length indication device 1219 may be configured to perform and that other functions included throughout this disclosure may also be performed by the MIC length indication device 1219.

While the machine-readable medium 1222 is illustrated as a single medium, the term "machine-readable medium" may include a single medium or multiple media (e.g., a centralized or distributed database, and/or associated caches and servers) configured to store the one or more instructions 1224.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 1200 and that cause the machine 1200 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 1224 may further be transmitted or received over a communications network 1226 using a transmission medium via the network interface device/transceiver 1220 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 1220 may include one or more physical jacks (e.g., Ethernet, coaxial, or phone jacks) or one or more antennas to connect to the communications network 1226. In an example, the network interface device/transceiver 1220 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 1200 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

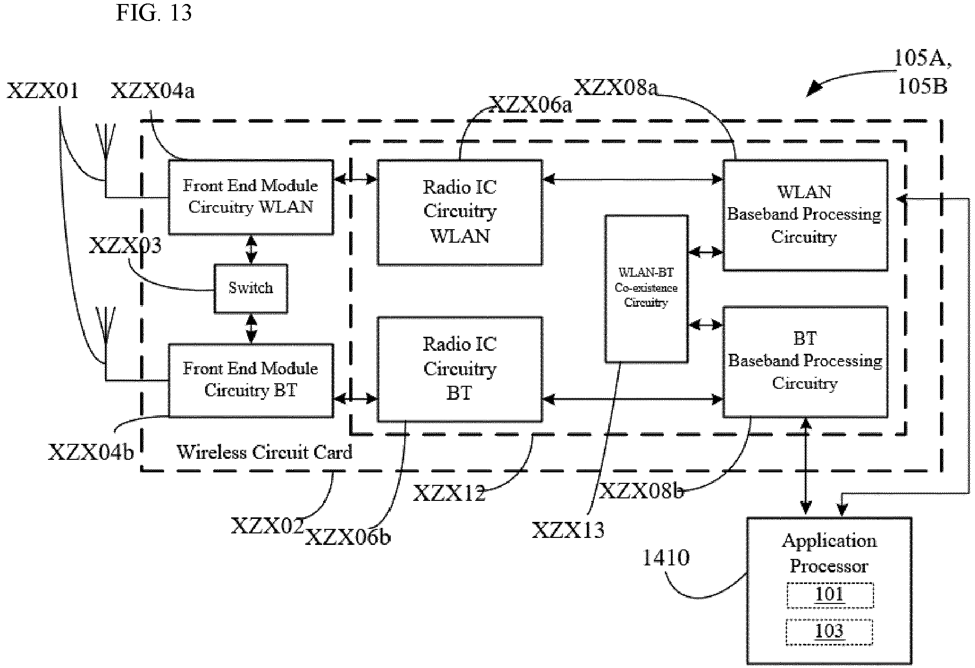

FIG. 13 is a block diagram of a radio architecture 105A, 105B in accordance with some embodiments that may be implemented in any one of the example AP(s) 102 and/or the example user device(s) 120 of FIG. 1. Radio architecture 105A, 105B may include radio front-end module (FEM) circuitry 1304a-b, radio IC circuitry 1306a-b and baseband processing circuitry 1308a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 1304a-b may include a WLAN or Wi-Fi FEM circuitry 1304a and a Bluetooth (BT) FEM circuitry 1304b. The WLAN FEM circuitry 1304a may include a receive signal path comprising circuitry configured to operate on WLAN RF signals received from one or more antennas 1301, to amplify the received signals and to provide the amplified versions of the received signals to the WLAN radio IC circuitry 1306a for further processing. The BT FEM circuitry 1304b may include a receive signal path which may include circuitry configured to operate on BT RF signals received from one or more antennas 1301, to amplify the received signals and to provide the amplified versions of the received signals to the BT radio IC circuitry 1306b for further processing. FEM circuitry 1304a may also include a transmit signal path which may include circuitry configured to amplify WLAN signals provided by the radio IC circuitry 1306a for wireless transmission by one or more of the antennas 1301. In addition, FEM circuitry 1304b may also include a transmit signal path which may include circuitry configured to amplify BT signals provided by the radio IC circuitry 1306b for wireless transmission by the one or more antennas. In the embodiment of FIG. 13, although FEM 1304a and FEM 1304b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 1306a-b as shown may include WLAN radio IC circuitry 1306a and BT radio IC circuitry 1306b. The WLAN radio IC circuitry 1306a may include a receive signal path which may include circuitry to down-convert WLAN RF signals received from the FEM circuitry 1304a and provide baseband signals to WLAN baseband processing circuitry 1308a. BT radio IC circuitry 1306b may in turn include a receive signal path which may include circuitry to down-convert BT RF signals received from the FEM circuitry 1304b and provide baseband signals to BT baseband processing circuitry 1308b. WLAN radio IC circuitry 1306a may also include a transmit signal path which may include circuitry to up-convert WLAN baseband signals provided by the WLAN baseband processing circuitry 1308a and provide WLAN RF output signals to the FEM circuitry 1304a for subsequent wireless transmission by the one or more antennas 1301. BT radio IC circuitry 1306b may also include a transmit signal path which may include circuitry to up-convert BT baseband signals provided by the BT baseband processing circuitry 1308b and provide BT RF output signals to the FEM circuitry 1304b for subsequent wireless transmission by the one or more antennas 1301. In the embodiment of FIG. 13, although radio IC circuitries 1306a and 1306b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 1308a-b may include a WLAN baseband processing circuitry 1308a and a BT baseband processing circuitry 1308b. The WLAN baseband processing circuitry 1308a may include a memory, such as, for example, a set of RAM arrays in a Fast Fourier Transform or Inverse Fast Fourier Transform block (not shown) of the WLAN baseband processing circuitry 1308a. Each of the WLAN baseband circuitry 1308a and the BT baseband circuitry 1308b may further include one or more processors and control logic to process the signals received from the corresponding WLAN or BT receive signal path of the radio IC circuitry 1306a-b, and to also generate corresponding WLAN or BT baseband signals for the transmit signal path of the radio IC circuitry 1306a-b. Each of the baseband processing circuitries 1308a and 1308b may further include physical layer (PHY) and medium access control layer (MAC) circuitry, and may further interface with a device for generation and processing of the baseband signals and for controlling operations of the radio IC circuitry 1306a-b.

Referring still to FIG. 13, according to the shown embodiment, WLAN-BT coexistence circuitry 1313 may include logic providing an interface between the WLAN baseband circuitry 1308a and the BT baseband circuitry 1308b to enable use cases requiring WLAN and BT coexistence. In addition, a switch 1303 may be provided between the WLAN FEM circuitry 1304a and the BT FEM circuitry 1304b to allow switching between the WLAN and BT radios according to application needs. In addition, although the antennas 1301 are depicted as being respectively connected to the WLAN FEM circuitry 1304a and the BT FEM circuitry 1304b, embodiments include within their scope the sharing of one or more antennas as between the WLAN and BT FEMs, or the provision of more than one antenna connected to each of FEM 1304a or 1304b.

In some embodiments, the front-end module circuitry 1304a-b, the radio IC circuitry 1306a-b, and baseband processing circuitry 1308a-b may be provided on a single radio card, such as wireless radio card 1302. In some other embodiments, the one or more antennas 1301, the FEM circuitry 1304a-b and the radio IC circuitry 1306a-b may be provided on a single radio card. In some other embodiments, the radio IC circuitry 1306a-b and the baseband processing circuitry 1308a-b may be provided on a single chip or integrated circuit (IC), such as IC 1312.

In some embodiments, the wireless radio card 1302 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for highefficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, the BT baseband circuitry 1308b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160 MHz) (with non-contiguous bandwidths). In some embodiments, a 920 MHz channel bandwidth may be used. The scope of the embodiments is not limited with respect to the above center frequencies however.\

FIG. 14 illustrates WLAN FEM circuitry 1304a in accordance with some embodiments. Although the example of FIG. 14 is described in conjunction with the WLAN FEM circuitry 1304a, the example of FIG. 14 may be described in conjunction with the example BT FEM circuitry 1304b (FIG. 13), although other circuitry configurations may also be suitable.

In some embodiments, the FEM circuitry 1304a may include a TX/RX switch 1402 to switch between transmit mode and receive mode operation. The FEM circuitry 1304a may include a receive signal path and a transmit signal path. The receive signal path of the FEM circuitry 1304a may include a low-noise amplifier (LNA) 1406 to amplify received RF signals 1403 and provide the amplified received RF signals 1407 as an output (e.g., to the radio IC circuitry 1306a-b (FIG. 13)). The transmit signal path of the circuitry 1304a may include a power amplifier (PA) to amplify input RF signals 1409 (e.g., provided by the radio IC circuitry 1306a-b), and one or more filters 1412, such as band-pass filters (BPFs), low-pass filters (LPFs) or other types of filters, to generate RF signals 1415 for subsequent transmission (e.g., by one or more of the antennas 1301 (FIG. 13)) via an example duplexer 1414.

In some dual-mode embodiments for Wi-Fi communication, the FEM circuitry 1304a may be configured to operate in either the 2.4 GHz frequency spectrum or the 5 GHz frequency spectrum. In these embodiments, the receive signal path of the FEM circuitry 1304a may include a receive signal path duplexer 1404 to separate the signals from each spectrum as well as provide a separate LNA 1406 for each spectrum as shown. In these embodiments, the transmit signal path of the FEM circuitry 1304a may also include a power amplifier 1410 and a filter 1412, such as a BPF, an LPF or another type of filter for each frequency spectrum and a transmit signal path duplexer 1414 to provide the signals of one of the different spectrums onto a single transmit path for subsequent transmission by the one or more of the antennas 1301 (FIG. 13). In some embodiments, BT communications may utilize the 2.4 GHz signal paths and may utilize the same FEM circuitry 1304a as the one used for WLAN communications.

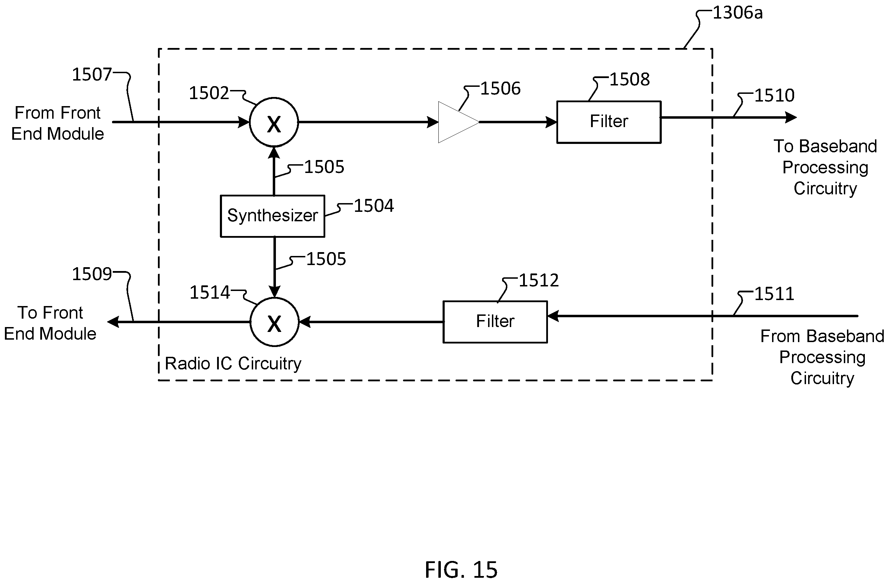

FIG. 15 illustrates radio IC circuitry 1306a in accordance with some embodiments. The radio IC circuitry 1306a is one example of circuitry that may be suitable for use as the WLAN or BT radio IC circuitry 1306a/1306b (FIG. 13), although other circuitry configurations may also be suitable. Alternatively, the example of FIG. 15 may be described in conjunction with the example BT radio IC circuitry 1306b.

In some embodiments, the radio IC circuitry 1306a may include a receive signal path and a transmit signal path. The receive signal path of the radio IC circuitry 1306a may include at least mixer circuitry 1502, such as, for example, down-conversion mixer circuitry, amplifier circuitry 1506 and filter circuitry 1508. The transmit signal path of the radio IC circuitry 1306a may include at least filter circuitry 1512 and mixer circuitry 1514, such as, for example, up-conversion mixer circuitry. Radio IC circuitry 1306a may also include synthesizer circuitry 1504 for synthesizing a frequency 1505 for use by the mixer circuitry 1502 and the mixer circuitry 1514. The mixer circuitry 1502 and/or 1514 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 15 illustrates only a simplified version of a radio IC circuitry, and may include, although not shown, embodiments where each of the depicted circuitries may include more than one component. For instance, mixer circuitry 1514 may each include one or more mixers, and filter circuitries 1508 and/or 1512 may each include one or more filters, such as one or more BPFs and/or LPFs according to application needs. For example, when mixer circuitries are of the direct-conversion type, they may each include two or more mixers.

In some embodiments, mixer circuitry 1502 may be configured to down-convert RF input signals 1507 received from the FEM circuitry 1304a-b (FIG. 13) based on the synthesized frequency 1505 provided by synthesizer circuitry 1504. The amplifier circuitry 1506 may be configured to amplify the down-converted signals and the filter circuitry 1508 may include an LPF configured to remove unwanted signals from the down-converted signals to generate output baseband signals 1507. Output baseband signals 1507 may be provided to the baseband processing circuitry 1308a-b (FIG. 13) for further processing. In some embodiments, the output baseband signals 1507 may be zero-frequency baseband signals, although this is not a requirement. In some embodiments, mixer circuitry 1502 may comprise passive mixers, although the scope of the embodiments is not limited in this respect.

In some embodiments, the mixer circuitry 1514 may be configured to up-convert input baseband signals 1511 based on the synthesized frequency 1505 provided by the synthesizer circuitry 1504 to generate RF output signals 1509 for the FEM circuitry 1304a-b. The baseband signals 1511 may be provided by the baseband processing circuitry 1308a-b and may be filtered by filter circuitry 1512. The filter circuitry 1512 may include an LPF or a BPF, although the scope of the embodiments is not limited in this respect.

In some embodiments, the mixer circuitry 1502 and the mixer circuitry 1514 may each include two or more mixers and may be arranged for quadrature down-conversion and/or up-conversion respectively with the help of synthesizer circuitry 1504. In some embodiments, the mixer circuitry 1502 and the mixer circuitry 1514 may each include two or more mixers each configured for image rejection (e.g., Hartley image rejection). In some embodiments, the mixer circuitry 1502 and the mixer circuitry 1514 may be arranged for direct down-conversion and/or direct up-conversion, respectively. In some embodiments, the mixer circuitry 1502 and the mixer circuitry 1514 may be configured for super-heterodyne operation, although this is not a requirement.

Mixer circuitry 1502 may comprise, according to one embodiment: quadrature passive mixers (e.g., for the in-phase (I) and quadrature phase (Q) paths). In such an embodiment, RF input signal 1507 from FIG. 15 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 1505 of synthesizer circuitry 1504 (FIG. 15). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 1507 (FIG. 15) may comprise a balanced signal, although the scope of the embodiments is not limited in this respect. The I and Q baseband output signals may be provided to low-noise amplifier, such as amplifier circuitry 1506 (FIG. 15) or to filter circuitry 1408 (FIG. 14).

In some embodiments, the output baseband signals 1510 and the input baseband signals 1511 may be analog baseband signals, although the scope of the embodiments is not limited in this respect. In some alternate embodiments, the output baseband signals 1510 and the input baseband signals 1511 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 1504 may be a fractional-N synthesizer or a fractional N/N+1 synthesizer, although the scope of the embodiments is not limited in this respect as other types of frequency synthesizers may be suitable. For example, synthesizer circuitry 1504 may be a delta-sigma synthesizer, a frequency multiplier, or a synthesizer comprising a phase-locked loop with a frequency divider. According to some embodiments, the synthesizer circuitry 1504 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 1504 may be provided by a voltage controlled oscillator (VCO), although that is not a requirement. A divider control input may further be provided by either the baseband processing circuitry 1308a-b (FIG. 13) depending on the desired output frequency 1505. In some embodiments, a divider control input (e.g., N) may be determined from a look-up table (e.g., within a Wi-Fi card) based on a channel number and a channel center frequency as determined or indicated by the example application processor 1310 (FIG. 13). The application processor 1310 (FIG. 13) may include, or otherwise be connected to, one of the example secure signal converter 101 or the example received signal converter 103 (e.g., depending on which device the example radio architecture is implemented in).

In some embodiments, synthesizer circuitry 1504 (FIG. 15) may be configured to generate a carrier frequency as the output frequency 1505, while in other embodiments, the output frequency 1505 may be a fraction of the carrier frequency (e.g., one-half the carrier frequency, one-third the carrier frequency). In some embodiments, the output frequency 1505 may be a LO frequency (fLO).

FIG. 16 illustrates a functional block diagram of baseband processing circuitry 1308a in accordance with some embodiments. The baseband processing circuitry 1308a is one example of circuitry that may be suitable for use as the baseband processing circuitry 1308a (FIG. 13), although other circuitry configurations may also be suitable.

The baseband processing circuitry 1308a may include a receive baseband processor (RX BBP) 1602 for processing receive baseband signals 1609 provided by the radio IC circuitry 1306a-b (FIG. 13) and a transmit baseband processor (TX BBP) 1604 for generating transmit baseband signals 1611 for the radio IC circuitry 1306a-b. The baseband processing circuitry 1308a may also include control logic 1606 for coordinating the operations of the baseband processing circuitry 1308a.

In some embodiments (e.g., when analog baseband signals are exchanged between the baseband processing circuitry 1308a-b and the radio IC circuitry 1306a-b), the baseband processing circuitry 1308a may include ADC 1610 to convert analog baseband signals 1609 received from the radio IC circuitry 1306a-b to digital baseband signals for processing by the RX BBP 1602. In these embodiments, the baseband processing circuitry 1308a may also include DAC 1612 to convert digital baseband signals from the TX BBP 1604 to analog baseband signals 1611.

In some embodiments that communicate OFDM signals or OFDMA signals, such as through baseband processing circuitry 1308a (see also FIG. 13), the transmit baseband processor 1604 may be configured to generate OFDM or OFDMA signals as appropriate for transmission by performing an inverse fast Fourier transform (IFFT). The receive baseband processor 1602 may be configured to process received OFDM signals or OFDMA signals by performing an FFT. In some embodiments, the receive baseband processor 1602 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 13, in some embodiments, the antennas 1301 (FIG. 13) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 1301 may each include a set of phased-array antennas, although embodiments are not so limited.

Although the radio architecture 105A, 105B of FIG. 13 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, singlecarrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The following examples pertain to further embodiments.

Example 1 may include a device comprising processing circuitry coupled to storage, the processing circuitry configured to: utilize one or more reserved bits to indicate a message integrity code (MIC) length; generate a frame comprising the one or more reserved bits, wherein the one or more reserved bits are included in a message integrity code (MIC) control of fast basic service set transition element (FTE); and cause to send the frame to one or more STAs.

Example 2 may include the device of example 1 and/or some other example herein, wherein the processing circuitry may be further configured to verify the MIC length aligns with an inferred MIC length.

Example 3 may include the device of example 1 and/or some other example herein, wherein the inferred MIC length may be from a pairwise master key (PMK-R1) length retrieved at a later time.

Example 4 may include the device of example 1 and/or some other example herein, further comprising a transceiver configured to transmit and receive wireless signals.

Example 5 may include the device of example 4 and/or some other example herein, further comprising an antenna coupled to the transceiver to cause to send the frame.

Example 6 may include a non-transitory computer-readable medium storing computer-executable instructions which when executed by one or more processors result in performing operations comprising: utilizing one or more reserved bits to indicate a message integrity code (MIC) length; generating a frame comprising the one or more reserved bits, wherein the one or more reserved bits are included in a message integrity code (MIC) control of fast basic service set transition element (FTE); and causing to send the frame to one or more STAs.

Example 7 may include the non-transitory computer-readable medium of example 6 and/or some other example herein, wherein the operations further comprise verify the MIC length aligns with an inferred MIC length.

Example 8 may include the non-transitory computer-readable medium of example 6 and/or some other example herein, wherein the inferred MIC length may be from a pairwise master key (PMK-R1) length retrieved at a later time.

Example 9 may include a method comprising: utilizing one or more reserved bits to indicate a message integrity code (MIC) length; generating a frame comprising the one or more reserved bits, wherein the one or more reserved bits are included in a message integrity code (MIC) control of fast basic service set transition element (FTE); and causing to send the frame to one or more STAs.

Example 10 may include the method of example 9 and/or some other example herein, further comprising verify the MIC length aligns with an inferred MIC length.

Example 11 may include the method of example 9 and/or some other example herein, wherein the inferred MIC length may be from a pairwise master key (PMK-R1) length retrieved at a later time.

Example 12 may include an apparatus comprising means for: utilizing one or more reserved bits to indicate a message integrity code (MIC) length; generating a frame comprising the one or more reserved bits, wherein the one or more reserved bits are included in a message integrity code (MIC) control of fast basic service set transition element (FTE); and causing to send the frame to one or more STAs.

Example 13 may include the apparatus of example 12 and/or some other example herein, further comprising verify the MIC length aligns with an inferred MIC length.

Example 14 may include the apparatus of example 12 and/or some other example herein, wherein the inferred MIC length may be from a pairwise master key (PMK-R1) length retrieved at a later time.

Example 15 may include one or more non-transitory computer-readable media comprising instructions to cause an electronic device, upon execution of the instructions by one or more processors of the electronic device, to perform one or more elements of a method described in or related to any of examples 1-14, or any other method or process described herein.

Example 16 may include an apparatus comprising logic, modules, and/or circuitry to perform one or more elements of a method described in or related to any of examples 1-14, or any other method or process described herein.

Example 17 may include a method, technique, or process as described in or related to any of examples 1-14, or portions or parts thereof.

Example 18 may include an apparatus comprising: one or more processors and one or more computer readable media comprising instructions that, when executed by the one or more processors, cause the one or more processors to perform the method, techniques, or process as described in or related to any of examples 1-14, or portions thereof.

Example 19 may include a method of communicating in a wireless network as shown and described herein.

Example 20 may include a system for providing wireless communication as shown and described herein.

Example 21 may include a device for providing wireless communication as shown and described herein.

Example 22 is a device comprising processing circuitry coupled to storage, the processing circuitry configured to utilize one or more reserved bits to indicate a message integrity code (MIC) length. The processing circuitry may also generate a frame including the one or more reserved bits, wherein the one or more reserved bits are included in a MIC control of a fast basic service set transition element (FTE). The processing circuitry may also cause to send the frame to one or more stations (STAs).

Example 23 is the device of example 22, wherein the processing circuitry is further configured to verify whether the MIC length aligns with an inferred MIC length.

Example 24 is the device of either one of examples 22 or 23, wherein the inferred MIC length is from a pairwise master key (PMK-R1) length retrieved at a later time.

Example 25 is the device of any one of example 22 to 24, further including a transceiver configured to transmit and receive wireless signals.

Example 26 is the device of example 25, further including an antenna coupled to the transceiver to cause to send the frame.

Example 27 is the device of any one of examples 22 to 26, wherein the MIC control of the FTE includes a MIC control field within the FTE.

Example 28 is the device of any one of examples 22 to 27, wherein the FTE is included in a series of four messages of fast basic service set transition (FT), wherein the processing circuitry is configured to provide the MIC length in at least one message of the series of four messages.

Example 29 is the device of any one of examples 22 to 28, wherein the MIC length is based on a hash algorithm of an authentication and key management (AKM) suite, wherein the AKM suite is indicated in a robust security network element (RSNE) of a frame that carries the FTE.

Example 30 is the device of any one of examples 22 to 29, wherein the AKM suite includes AKM 00-0F-AC:25.

Example 31 is a non-transitory computer-readable medium storing computer-executable instructions which when executed by one or more processors result in performing operations including utilizing one or more reserved bits to indicate a message integrity code (MIC) length. The operations also include generating a frame comprising the one or more reserved bits, wherein the one or more reserved bits are included in a MIC control of a fast basic service set transition element (FTE). The operations also include causing to send the frame to one or more stations (STAs).

Example 32 is the non-transitory computer-readable medium of example 31, wherein the operations further comprise verifying whether the MIC length aligns with an inferred MIC length.

Example 33 is the non-transitory computer-readable medium of either one of example 31 or 32, wherein the inferred MIC length is from a pairwise master key (PMK-R1) length retrieved at a later time.

Example 34 is a method including utilizing one or more reserved bits to indicate a message integrity code (MIC) length. The method also includes generating a frame comprising the one or more reserved bits, wherein the one or more reserved bits are included in a MIC control of a fast basic service set transition element (FTE). The method also includes causing to send the frame to one or more stations (STAs).

Example 35 is the method of claim 34, further including verifying the MIC length aligns with an inferred MIC length.

Example 36 is the method of either one of examples 34 or 35, wherein the inferred MIC length is from a pairwise master key (PMK-R1) length retrieved at a later time.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computerimplemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. A device comprising processing circuitry coupled to storage, the processing circuitry configured to:
utilize one or more reserved bits to indicate a message integrity code, MIC, length;
generate a frame comprising the one or more reserved bits, wherein the one or more reserved bits are included in a MIC control of a fast basic service set transition element, FTE; and
cause to send the frame to one or more stations, STAs.

2. The device of claim 1, wherein the processing circuitry is further configured to verify whether the MIC length aligns with an inferred MIC length.

3. The device of either one of claims 1 or 2, wherein the inferred MIC length is from a pairwise master key, PMK-R1, length retrieved at a later time.

4. The device of any one of claims 1 to 3, further comprising a transceiver configured to transmit and receive wireless signals.

5. The device of claim 4, further comprising an antenna coupled to the transceiver to cause to send the frame.

6. The device of any one of claims 1 to 5, wherein the MIC control of the FTE comprises a MIC control field within the FTE.

7. The device of any one of claims 1 to 6, wherein the FTE is included in a series of four messages of fast basic service set transition, FT, wherein the processing circuitry is configured to provide the MIC length in at least one message of the series of four messages.

8. The device of any one of claims 1 to 7, wherein the MIC length is based on a hash algorithm of an authentication and key management, AKM, suite, wherein the AKM suite is indicated in a robust security network element, RSNE, of a frame that carries the FTE.

9. The device of any one of claims 1 to 8, wherein the AKM suite comprises AKM 00-0F-AC:25.

10. A non-transitory computer-readable medium storing computer-executable instructions which when executed by one or more processors result in performing operations comprising:
utilizing one or more reserved bits to indicate a message integrity code, MIC, length;
generating a frame comprising the one or more reserved bits, wherein the one or more reserved bits are included in a MIC control of a fast basic service set transition element, FTE; and
causing to send the frame to one or more stations, STAs.

11. The non-transitory computer-readable medium of claim 10, wherein the operations further comprise verifying whether the MIC length aligns with an inferred MIC length.

12. The non-transitory computer-readable medium of either one of claims 10 or 11, wherein the inferred MIC length is from a pairwise master key, PMK-R1, length retrieved at a later time.

13. A method comprising:
utilizing one or more reserved bits to indicate a message integrity code, MIC, length;
generating a frame comprising the one or more reserved bits, wherein the one or more reserved bits are included in a MIC control of a fast basic service set transition element, FTE; and
causing to send the frame to one or more stations, STAs.

14. The method of claim 13, further comprising verifying the MIC length aligns with an inferred MIC length.

15. The method of either one of claims 13 or 14, wherein the inferred MIC length is from a pairwise master key, PMK-R1, length retrieved at a later time.
